# EUROPEAN PATENT APPLICATION

(11) **EP 2 369 821 A1**
(43) Date of publication of application: **28.09.2011**
(21) Application number: 11159517.9
(22) Date of filing: 24.03.2011
(51) Int. Cl.: H04M 1/725

(54) **Automatic switch hook for mobile phone**

(30) Priority: 26.03.2010 JP 2010073085
(71) Applicant: NTT DOCOMO, INC., Chiyoda-ku Tokyo 100-6150 (JP)
(72) Inventor: Komine, Takuro, Tokyo 100-6150 (JP)
(74) Representative: Beder, Jens

(57) **Abstract**

A mobile phone (10) includes an input section (18) that receives a call initiation instruction for a call with another mobile phone (M), a speaker (14) that outputs sound from another mobile phone (M) at the time of the call, a detection section (20) that is arranged in the vicinity of the speaker (14) and detects the distance to a user (U), a determination section (22) that determines that a motion to start the call has been made by the user (U) when the distance detected by the detection section (20) becomes shorter than a predetermined distance after the call initiation instruction is received by the input section (18), and a control section (26) that performs call initiation processing on another mobile phone (M) on the basis of the call initiation instruction received by the input section (18) when the determination section (22) determines that the motion to start the call has been made.

## Description

### BACKGROUND OF THE INVENTION

### Field of the Invention

The present invention relates to a telephone and a method of controlling call initiation in the telephone.

### Related Background Art

A telephone, such as a mobile phone, has a directory function of registering telephone numbers of contacts and a history function of storing incoming and outgoing call histories. In a telephone having these functions, call initiation, such as telephone call initiation or message transmission, is carried out through simple processing in which a call destination is selected from among the registered and stored telephone numbers or mail addresses and an OK button is depressed. Because the call initiation processing is increasingly simplified, in few cases is it realized that the call destination is wrong just after the OK button for call initiation is depressed. Thus, for example, in a transmission method described in Japanese Unexamined Patent Application Publication No. 2007-193717, transmission data for an electronic mail is compared with data recorded in a directory (address book), and before call initiation processing is performed, a confirmation warning is displayed so as to prevent erroneous call initiation. In particular, in the case of erroneous transmission of an electronic mail, the transmission contents may be sent to an erroneous contact, and in some cases, a serious situation is created. Thus, there are suggested a large number of methods of preventing erroneous call initiation including the method described in Japanese Unexamined Patent Application Publication No. 2007-193717.

### SUMMARY OF THE INVENTION

With regard to the methods of preventing erroneous transmission of an electronic mail including the above-described method described in Japanese Unexamined Patent Application Publication No. 2007-193717, a large number of means are suggested. But there is no suggestion of a means for preventing erroneous call initiation when a call is initiated in a telephone. However, even if a call is initiated in a telephone, when a certain call destination is selected from among the registered and stored telephone numbers and the OK button is then depressed to carry out call initiation, in some cases, a call destination is erroneously selected and the OK button is unthinkingly depressed, causing erroneous call initiation. For this sort of telephone, erroneous call initiation is generally ignored because a serious situation is not created, unlike in a case where the transmission contents are sent to an erroneous contact, for example, in erroneous transmission of an electronic mail. However, since the call destination feels at least some inconvenience, it is gradually understood that there is a potential need for preventing as much as possible erroneous call initiation in a telephone with a simple prevention means.

An object of the invention is to provide a telephone and a method of controlling call initiation capable of preventing erroneous call initiation in a telephone using a simple means.

The invention provides a telephone. The telephone comprises an input unit that receives a call initiation instruction for a call with another telephone, a determination unit that determines whether or not a user makes a motion to start the call after the call initiation instruction is received by the input unit, and a control unit that performs call initiation processing with respect to another telephone on the basis of the call initiation instruction received by the input unit when the determination unit determines that the motion to start the call has been made.

The invention also provides a method of controlling call initiation. The method comprises the steps of, receiving a call initiation instruction for a call with another telephone with an input unit, determining whether or not a user makes an motion to start the call after the call initiation instruction is received in the receiving with a determination unit, and performing call initiation processing with respect to another telephone on the basis of the call initiation instruction received in the receiving with a control unit when it is determined in the determining that the motion to start the call has been made.

With the telephone or the method of controlling call initiation, it is determined whether the motion to start the call is made by the user after the call initiation instruction is received, and when it is determined that the motion has been made, the call initiation processing is performed on the basis of the received call initiation instruction. In this case, the call initiation processing is not performed only with the call initiation instruction, and when it is determined that the call start motion has been made after the call initiation instruction has been issued, the call initiation processing is initially performed. For this reason, even when the call destination is erroneously selected and the OK button is unthinkingly depressed, the call initiation processing is not performed, making it possible to prevent erroneous call initiation. That is, according to the invention, after it is confirmed through determination that the user reliably intends to call initiation, the call initiation processing is performed, such that it is possible to more effectively prevent erroneous call initiation. The determination is made on whether the call start motion can be determined, such that it is possible to realize the prevention of erroneous call initiation with a simple means.

The telephone may further comprise a sound output unit that outputs sound from another telephone at the time of the call, and a distance detection unit that is arranged in the vicinity of the sound output unit and detects the distance to a measurement target. When the distance detected by the distance detection unit becomes shorter than a predetermined distance, the determination unit may determine that the motion to start the call has been made. The telephone may further comprise an acceleration detection unit that detects acceleration applied to the telephone, and a storage section that stores standard data representing a variation in the acceleration when the motion to start the call is made. When the variation in the acceleration detected by the acceleration detection unit is substantially the same as the variation in the acceleration represented by the standard data stored in the storage section, the determination unit may determine that the motion to start the call is made.

The telephone may further include a sound output unit that outputs sound from another telephone at the time of the call, and an illuminance detection unit that is arranged in the vicinity of the sound output unit and detects illuminance. When the illuminance detected by the illuminance detection unit is lower than a predetermined illuminance, the determination unit may determine that the motion to start the call has been made. In these cases, the call start motion is detected and determined by using a simple sensor or a sensor which is embedded in the telephone, such that it is possible to easily incorporate a function of preventing erroneous call initiation in the telephone.

In the telephone, the input unit may receive a cancel instruction with respect to the call initiation instruction, and when the determination unit determines that the motion to start the call is not made within a predetermined time and when the cancel instruction is not received by the input unit within the time, the control unit may perform the call initiation processing on the basis of the call initiation instruction received by the input unit. In this case, even when the user does not make the call start motion after depressing the OK button for the call initiation processing, the cancel instruction is not received, thus it can be indirectly estimated that the user intends to perform the call initiation processing, and the call initiation processing is performed on the basis of the estimation. Thus, for the user, it is possible to effectively prevent erroneous call initiation. In the telephone, when the determination unit determines that the motion to start the call is not made within a predetermined time, the control unit may discard the call initiation instruction received by the input unit and stop the call initiation processing.

### BRIEF DESCRIPTION OF THE DRAWINGS

Fig. 1 is a perspective view showing a mobile phone according to a first embodiment.
Fig. 2 is a block diagram showing the functional configuration of the mobile phone.
Fig. 3 is a diagram showing screen display on the mobile phone according to the first embodiment.
Fig. 4 is a diagram showing the hardware configuration of the mobile phone.
Fig. 5 is a flowchart when call initiation control is performed in the mobile phone according to the first embodiment.
Fig. 6A is a perspective view showing a mobile phone according to a second embodiment, and Fig. 6B is a diagram showing screen display while a call initiation operation is being confirmed.
Fig. 7 is a flowchart when call initiation control is performed in the mobile phone according to the second embodiment.
Fig. 8A is a perspective view showing a mobile phone according to a third embodiment, and Fig. 8B is a diagram showing screen display while a call initiation operation is being confirmed.
Fig. 9 is a flowchart when call initiation control is performed in the mobile phone according to the third embodiment.

### DESCRIPTION OF THE PREFERRED EMBODIMENTS

Hereinafter, preferred embodiments of the invention will be described in detail with reference to the drawings. In the description of the drawings, if possible, the same constituent elements are represented by the same reference numerals, and overlapping description will be omitted.

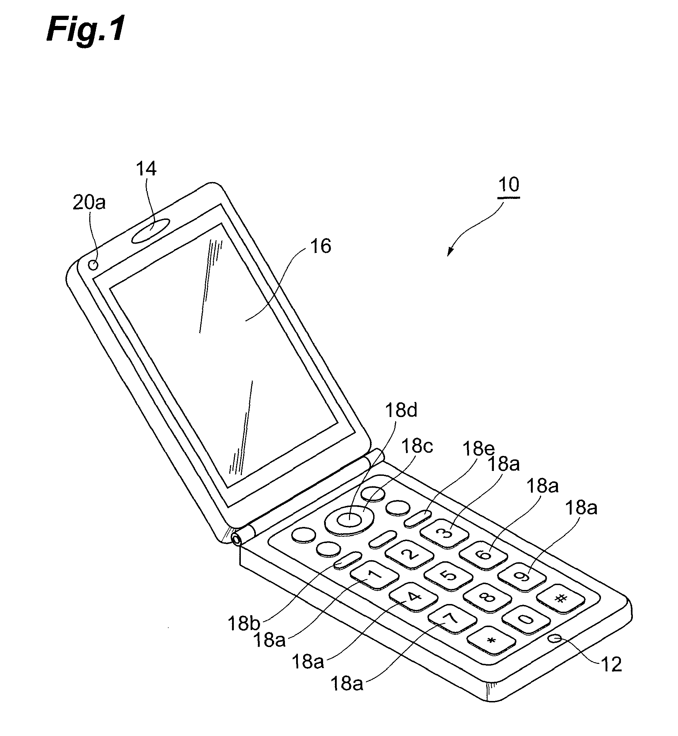

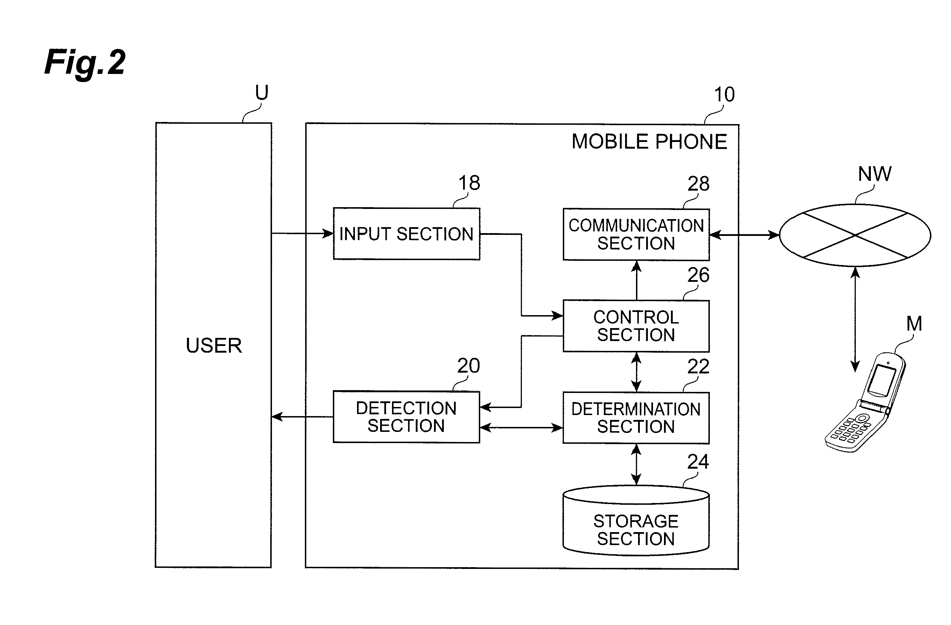

[First Embodiment] As shown in Figs. 1 and 2, a mobile phone 10 of this embodiment is a folding mobile phone which includes a microphone 12, a speaker 14 (sound output unit), and a display screen 16. The mobile phone 10 makes a call with another mobile phone M through a wireless network NW. The microphone 12 is a device which receives sound of a user U at the time of a call with another mobile phone M and transmits sound to another mobile phone M. The speaker 14 is a device which outputs sound from another mobile phone M at the time of a call with another mobile phone M and transmits sound to the user U.

As shown in Fig. 2, the mobile phone 10 functionally includes an input section 18, a detection section 20 (distance detection unit), a determination section 22 (determination unit), a storage section 24, a control section 26 and a communication section 28.

The input section 18 receives a call initiation instruction from the user U for a call with another mobile phone M. As shown in Fig. 1, the input section 18 includes a plurality of input buttons 18a to 18e. The input button 18a is a button which is used to separately input numerals, such as a telephone number. The input button 18b is a call button which is used to issue a call initiation instruction with a telephone number input by the input button 18a.

The input button 18c is a selection button which is used to select a certain telephone number from among a plurality of telephone numbers in a directory or outgoing call history. The input button 18d is a call button which is used to issue a call initiation instruction with a telephone number selected by the input button 18c. When a call initiation instruction for a call with another mobile phone M is received through the input button 18b or 18d, the input section 18 generates a call initiation instruction signal including telephone number information of the mobile phone M of the call destination and outputs the call initiation instruction signal to the control section 26.

The input button 18e is a cancel button which is used to input a cancel instruction to cancel call initiation processing based on the call initiation instruction after the call initiation instruction has been issued. When the cancel instruction is received from the user U within a predetermined time (for example, within five seconds) after the call initiation instruction has been received, the input section 18 outputs a cancel instruction signal including telephone number information of the mobile phone M of the call destination to the control section 26.

The detection section 20 is constituted by, for example, a distance sensor and detects the distance to a measurement target, such as the ear or face of the user U, near the mobile phone 10 when a call is made. If the call initiation instruction signal from the input section 18 is input to the control section 26, the detection section 20 activates the distance sensor on the basis of a detection instruction from the control section 26 to continuously detect the distance to the measurement target and outputs the detection value to the determination section 22. As the distance sensor, various types, such as an induction type, an electrostatic capacitance type, an ultrasonic type, an electromagnetic type, and an infrared type, may be used. In this embodiment, for example, an infrared distance sensor is used. These types of sensors are known, thus detailed description thereof will be omitted.

As shown in Fig. 1, the distance sensor which constitutes the detection section 20 is configured such that a measurement portion 20a is arranged in the vicinity of the speaker 14 laterally to the speaker 14, and when the user U makes a call, the approach to the ear or the like of the user U can be detected as the detection value. The distance sensor may be arranged in the vicinity of the microphone 12, and when the user U makes a call, may detect an approach to the mouth or the like of the user U as the detection value.

The determination section 22 determines whether or not an motion to start a call with another mobile phone M is made by the user U after the call initiation instruction has been received by the input section 18. When the distance (detection value) to the user U detected by the detection section 20 is shorter than a predetermined distance (for example, 5 cm), the determination section 22 determines that the motion (call start motion) to start a call with another mobile phone M has been made by the user U. When it is determined that the call start motion has been made by the user U, the determination section 22 outputs an operation execution signal to the control section 26. When it is determined that the call start motion has not been made by the user U within a predetermined time (for example, within five seconds), the determination section 22 outputs an operation non-execution signal to the control section 26. Data, such as the distance (5 cm) or the time (five seconds), which is used as the threshold value for the determination is stored in the storage section 24.

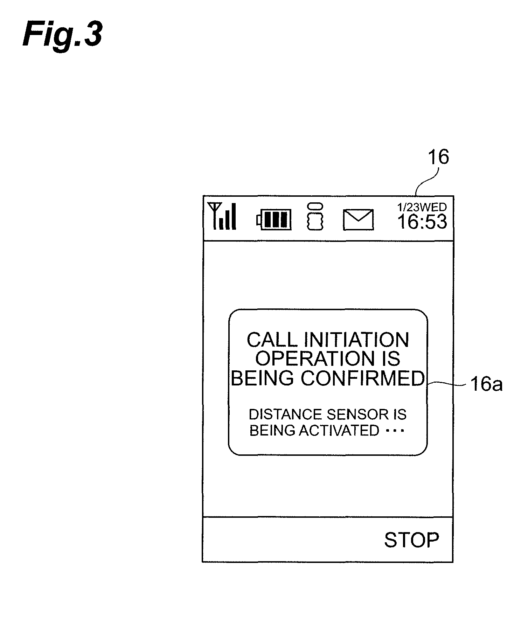

When the determination section 22 determines that the call start motion has been made, the control section 26 performs call initiation processing with respect to another mobile phone M on the basis of the call initiation instruction received by the input section 18. If the call initiation instruction signal is input from the input section 18 and the operation execution signal is input from the determination section 22, the control section 26 extracts the telephone number information of the mobile phone M of the call destination from the call initiation instruction signal and causes the communication section 28 to function such that the mobile phone 10 initiates a call to another mobile phone M so as to perform the call initiation processing based on the call initiation instruction signal. Thus, after the intention of call initiation of the user U is confirmed from the operation, a call to another mobile phone M is initiated with a little delay, such that erroneous call initiation or the like is prevented. In this embodiment, as shown in Fig. 3, during the delay, a notification screen 16a, "call initiation operation is being confirmed, distance sensor is being activated ...", is displayed on the display screen 16 so as to notify the user U that the call initiation operation is being confirmed.

Even when the call initiation instruction signal is input from the input section 18 and the operation non-execution signal is input from the determination section 22, if the cancel instruction signal is not input from the input section 18 within a predetermined time (for example, within five seconds), the control section 26 estimates that the user U does not intend to cancel call initiation. In this case, the control section 26 performs the call initiation processing based on the call initiation instruction signal after a predetermined time (for example, five seconds) has elapsed and causes the communication section 28 to function to initiate a call to another mobile phone M. Thus, after the intention of call initiation of the user U has indirectly been confirmed, call initiation to another mobile phone M is performed with a little delay, such that erroneous call initiation or the like is prevented. When the cancel instruction signal is input from the input section 18 within a predetermined time, the control section 26 discards the input call initiation instruction signal and stops the call initiation processing. Therefore, erroneous call initiation to another mobile phone M is reliably prevented.

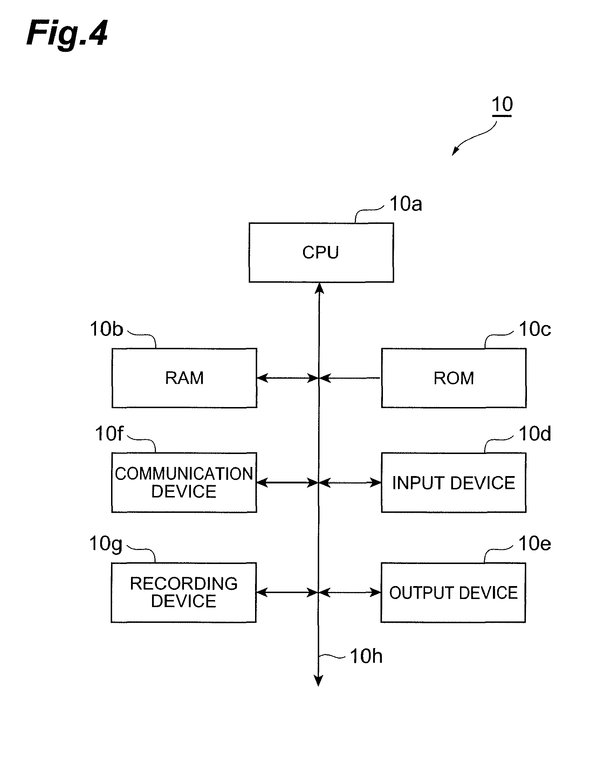

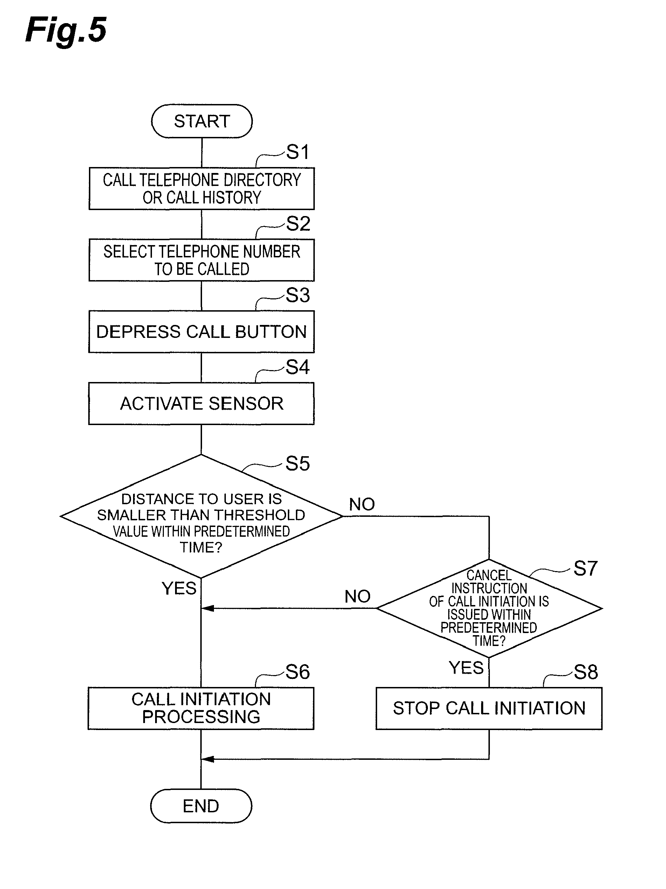

As shown in Fig. 4, the mobile phone 10 physically includes a CPU 10a, a RAM 10b, a ROM 10c, an input device 10d, an output device 10e, a communication device 10f, and a recording device 10g, which are connected to a bus 10h. The CPU 10a loads predetermined computer software (including a computer program or the like for performing processing in the mobile phone 10 shown in Fig. 5) stored in an internal memory of the ROM 10c or of the recording device 10g on the RAM 10b and executes computer software to perform overall control of the mobile phone 10.

The input device 10d is an input device which includes the microphone 12, the input buttons 18a to 18e, the distance sensor, or the like, and outputs input data to the CPU 10a. The output device 10e is the speaker 14, the display screen 16, such as an LCD, or the like, and outputs sound information, image information, or the like input from the CPU 10a. The communication device 10f has an interface for a call or communication with another mobile phone M through a communication network or the like. The recording device 10g stores computer software which is executable by the CPU 10a. The above-described functions are realized when the CPU 10a executes computer software stored in the ROM 10c, the recording device 10g, or the like and the constituent sections of the mobile phone 10 shown in Fig. 4 are operated.

Subsequently, a call initiation control method in the mobile phone 10 configured as above will be described in detail with reference to Fig. 5. Although in the call initiation control method shown in Fig. 5, a case will be described where a telephone number is selected from among telephone numbers registered in a directory or the like and a call is initiated, the same is applied to a case where a telephone number is input separately and a call is initiated.

First, a directory or a telephone history is called by using the input button 18c or the like of the input section 18 (Step S1), and a telephone number (the telephone number of another mobile phone M) to be called is selected by the user U (Step S2). Subsequently, the input button 18d serving as a call button is depressed by the user U so as to initiate a call on the basis of the selected telephone number (Step S3). If in Step S3, the input button 18d is depressed, the call initiation instruction for a call with another mobile phone M is received by the input section 18, and a call initiation instruction signal generated by the input section 18 is output to the control section 26.

If the call initiation instruction signal is output to the control section 26, the distance sensor of the detection section 20 is activated by the control section 26 (Step S4). Thus, the distance to the ear or the like of the user U is continuously measured by the distance sensor. Thereafter, the process progresses to Step S5, and the determination section 22 determines whether or not the distance to the ear or the like of the user U is smaller than a distance (for example, 5 cm) as a threshold value within a predetermined time (for example, within five seconds). If it is determined that the distance is smaller than the threshold value, it is determined that the call start motion has been made by the user U. The process progresses to Step S6 and the call initiation processing is performed by the control section 26.

If it is determined in Step S5 that the distance to the ear or the like of the user U is not smaller than the distance (for example, 5 cm) as the threshold value within the predetermined time (for example, five seconds), it is determined that the call start motion has not been made by the user U. The process progresses to Step S7 and it is determined whether or not the cancel instruction of call initiation is issued within a predetermined time. When it is determined in Step S7 that the cancel instruction of call initiation is not issued within the predetermined time, the process returns to Step S6, and the call initiation processing is performed in the same manner as described above. When it is determined in Step S7 that the cancel instruction of call initiation is issued within the predetermined time, the process progresses to Step S8, and the call initiation processing based on the call initiation instruction is stopped, thereby preventing erroneous call initiation.

As described above, according to this embodiment, it is determined whether or not the call start motion is made by the user U after the call initiation instruction is received. When it is determined that the call start motion has been made, the call initiation processing based on the received call initiation instruction is performed. For this reason, in the mobile phone 10 of this embodiment, the call initiation processing is not performed only with the call initiation instruction, and when it is determined that the call start motion has been made after the call initiation instruction has been issued, the call initiation processing is initially performed. For this reason, for example, even when the call destination is erroneously selected and the OK button is unthinkingly depressed, the call initiation processing is not immediately performed, and a time lag for cancel processing can be secured, making it possible to effectively prevent erroneous call initiation. That is, with the mobile phone 10, after it is confirmed that the user U reliably intends to initiate a call, the call initiation processing is performed, making it possible to effectively prevent erroneous call initiation.

In this embodiment, the determination on the call start motion is made by using the distance sensor, such as a simple sensor or a sensor which is embedded in the telephone, such that it is possible to realize the prevention of erroneous call initiation with a simple means and to easily incorporate a function of preventing erroneous call initiation in the mobile phone 10.

In this embodiment, the input section 18 receives a cancel instruction with respect to the call initiation instruction, and when the determination section 22 determines that the call start motion has not been made within a predetermined time and the cancel instruction is not received by the input section 18 within the time, the control section 26 performs the call initiation processing on the basis of the call initiation instruction received by the input section 18 with a little delay. For this reason, even when the user U does not make the call start motion after depressing the OK button for the call initiation processing, the cancel instruction is not received, thus it can be indirectly estimated that the user U intends to perform the call initiation processing. The call initiation processing is performed on the basis of the estimation. Therefore, for the user U, it is possible to effectively prevent erroneous call initiation.

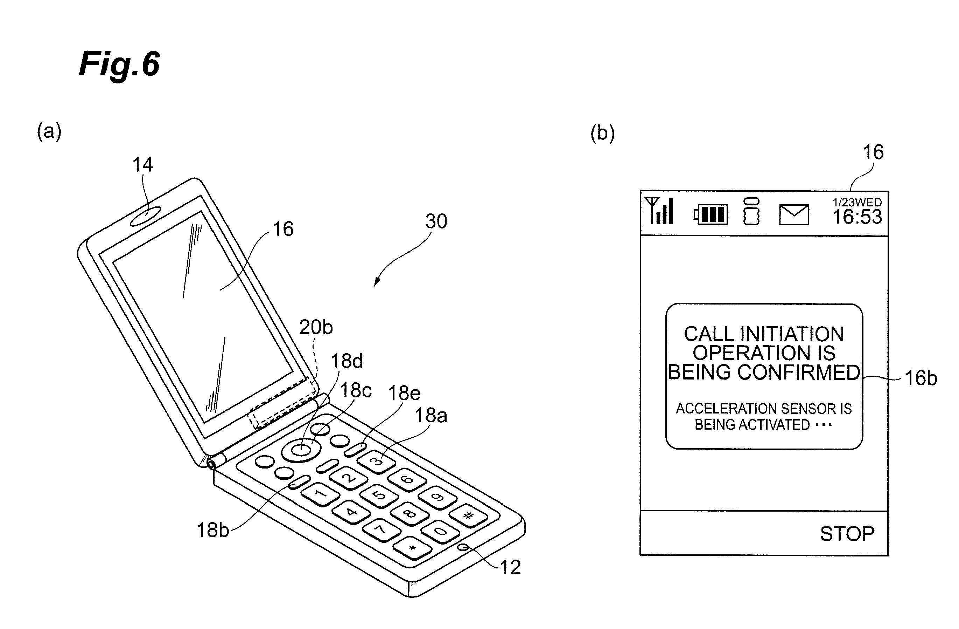

[Second Embodiment] Next, a second embodiment of the invention will be described. As shown in Fig. 6A, unlike in the first embodiment, in a mobile phone 30 according to the second embodiment, the detection section 20 is constituted by, for example, an acceleration sensor 20b. The acceleration sensor 20b can detect acceleration applied to the mobile phone 30. Other configuration is basically the same as those in the first embodiment. Hereinafter, description will be provided focusing on differences from the first embodiment.

The mobile phone 30 functionally includes an input section 18, a detection section 20 (acceleration detection unit), a determination section 22, a storage section 24, a control section 26, and a communication section 28. The functions of the input section 18, the control section 26, and the communication section 28 are the same as those in the first embodiment.

The detection section 20 is constituted by, for example, the acceleration sensor 20b and detects acceleration applied to the mobile phone 30. If the call initiation instruction signal from the input section 18 is input to the control section 26, the detection section 20 activates the acceleration sensor 20b on the basis of a detection instruction from the control section 26 to continuously detect acceleration applied to the mobile phone 30 and outputs the detection value to the determination section 22. The acceleration sensor 20b detects, for example, a variation in acceleration on each of the X axis, the Y axis, and the Z axis for each unit time (for example, 10 msec) as a numerical value. The acceleration sensor 20b itself is known, thus detailed description thereof will be omitted. As shown in Fig. 6A, the acceleration sensor 20b is arranged in the mobile phone 30, and when user U makes a call, can detect as the detection value a variation in acceleration when the user U approaches the mobile phone 30 to the face.

The determination section 22 determines whether or not the motion to start a call with another mobile phone M is made by the user U after the call initiation instruction has been received by the input section 18. If a variation in acceleration detected by the detection section 20 is substantially the same as a variation in acceleration when the call start motion is carried out, the determination section 22 determines that the call start motion has been made by the user U. When it is determined that the call start motion has been made by the user U, as in the first embodiment, the determination section 22 outputs the operation execution signal to the control section 26. When it is determined that the call start motion has not been made, the determination section 22 outputs the operation non-execution signal to the control section 26. The user U uses the mobile phone 30 to measure standard data of the variation in acceleration when the call start motion is made, and the standard data can be stored in the storage section 24. In the second embodiment, while call initiation is delayed, as shown in Fig. 6B, a notification screen 16a, "call initiation operation is being confirmed, acceleration sensor is being activated ...", is displayed on the display screen 16 so as to notify the user U that the call initiation operation is being confirmed.

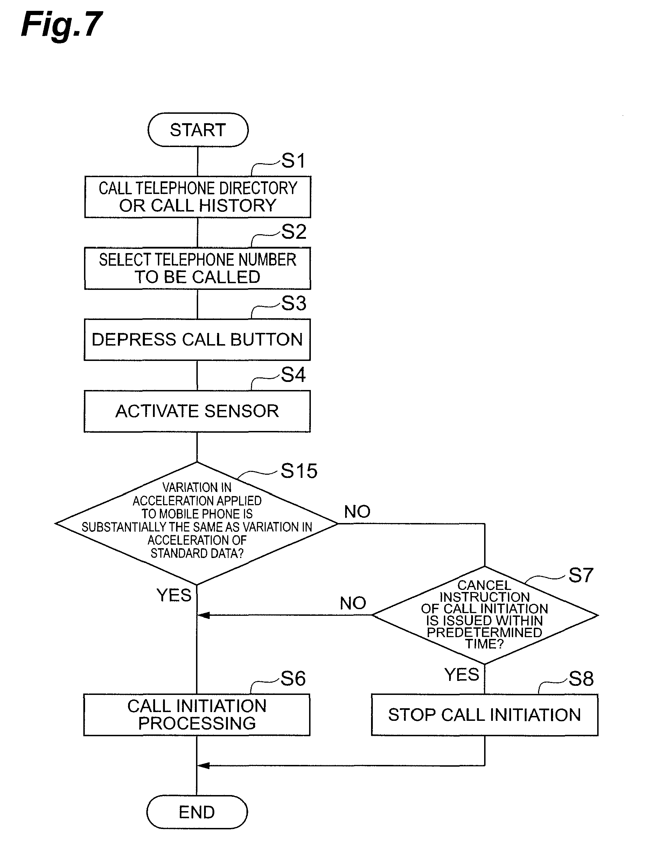

Subsequently, a call initiation control method in the mobile phone 30 configured as above will be described in detail with reference to Fig. 7.

First, as in the first embodiment, a directory or a telephone history is called (Step S1), and a telephone number to be called is selected (Step S2). Subsequently, the input button 18d serving as a call button is depressed so as to initiate a call on the basis of the selected telephone number (Step S3). Thereafter, the acceleration sensor 20b is activated by the control section 26 (Step S4), such that acceleration applied to the mobile phone 30 is continuously measured.

Subsequently, the determination section 22 determines whether or not a variation in measured acceleration is substantially the same as the variation in acceleration represented by standard data stored in the storage section 24 (Step S15). If it is determined that the variation in measured acceleration is substantially the same as the variation in acceleration represented by the standard data, it is determined that the call start motion has been made by the user U. The process progresses to Step S6 and the call initiation processing is performed by the control section 26. Here, the range of "substantially same" can be appropriately set. If it is determined in Step S15 that the variation in measured acceleration is not substantially the same as the variation in acceleration represented by the standard data, it is determined that the call start motion has not been made by the user U. The process progresses to Steps S7 and S8, and the same processing as in the first embodiment is performed.

As described above, according to this embodiment, as in the first embodiment, it is determined whether or not the call start motion is made by the user U after the call initiation instruction is received, and when it is determined that the call start motion has been made, the call initiation processing based on the received call initiation instruction is performed. For this reason, in the mobile phone 30 of this embodiment, a time lag for cancel processing can be secured, and erroneous call initiation can be effectively prevented. In this embodiment, the determination on the call start motion is made by using the acceleration sensor, such as a simple sensor or a sensor which is embedded in the telephone, such that it is possible to realize the prevention of erroneous call initiation with a simple means and to easily incorporate a function of preventing erroneous call initiation in the mobile phone 30.

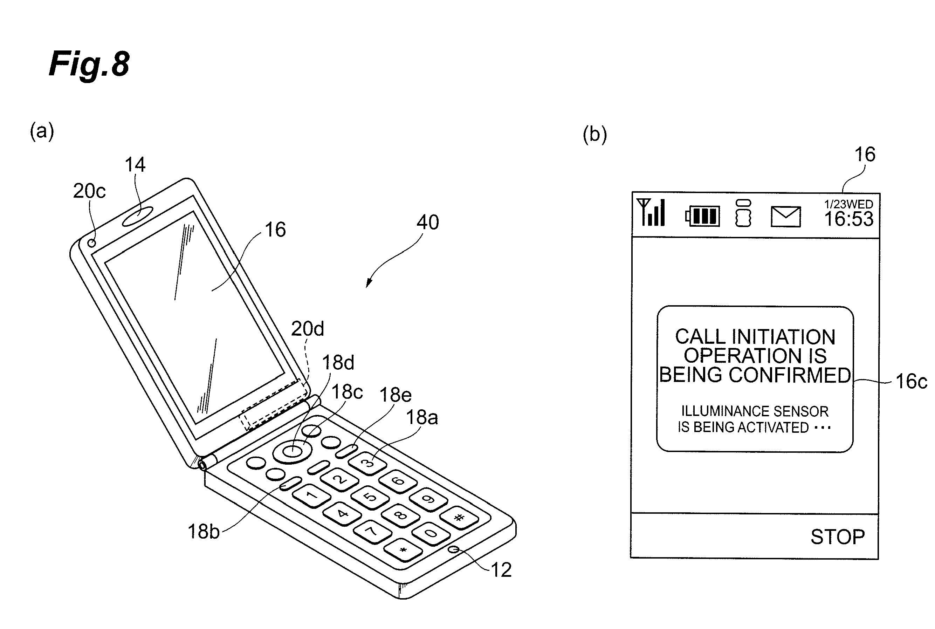

[Third Embodiment] Next, a third embodiment of the invention will be described. Unlike in the first embodiment, as shown in Fig. 8A, in a mobile phone 40 according to the third embodiment, the detection section 20 is constituted by, for example, an illuminance sensor 20c. The illuminance sensor 20c can detect illuminance around the speaker 14 of the mobile phone 40. Other configuration is basically the same as those in the first embodiment. Hereinafter, description will be provided focusing on differences from the first embodiment.

The mobile phone 40 functionally includes an input section 18, a detection section 20 (illuminance detection unit), a determination section 22, a storage section 24, a control section 26, and a communication section 28. The functions of the input section 18, the control section 26, and the communication section 28 are the same as those in the first embodiment.

The detection section 20 is constituted by, for example, the illuminance sensor 20c and detects illuminance around the speaker 14 of the mobile phone 40. If the call initiation instruction signal from the input section 18 is input to the control section 26, the detection section 20 activates the illuminance sensor 20c on the basis of a detection instruction from the control section 26 to continuously detect illuminance around the speaker 14 of the mobile phone 40 and outputs the detection value to the determination section 22. The illuminance sensor 20c itself is known, thus detailed description thereof will be omitted. As shown in Fig. 8A, the illuminance sensor 20c is arranged in the vicinity of the speaker 14 of the mobile phone 40 laterally to the speaker 14 and when the user U makes a call, can detect an approach to the ear or the like of the user U as the detection value. The illuminance sensor 20c may be arranged in the vicinity of the microphone 12 and when the user U makes a call, may detect an approach to the mouth or the like of the user U as the detection value. The detection section 20 includes a folding/unfolding sensor 20d to detect whether the mobile phone 40 is unfolded or folded.

The determination section 22 determines whether or not the motion to start a call with another mobile phone M is made by the user U after the call initiation instruction has been received by the input section 18. When the illuminance detected by the detection section 20 is lower than a predetermined illuminance, the determination section 22 determines that the call start motion has been made by the user U. However, when the folding/unfolding sensor 20d detects that the mobile phone 40 is folded, even if the illuminance detected by the detection section 20 is lower than the predetermined illuminance, the determination section 22 does not determined that the call start motion has been made by the user U. When it is determined that the call start motion has been made by the user U, as in the first embodiment, the determination section 22 outputs the operation execution signal to the control section 26. When it is determined that the call start motion has not been made, the determination section 22 outputs the operation non-execution signal to the control section 26.

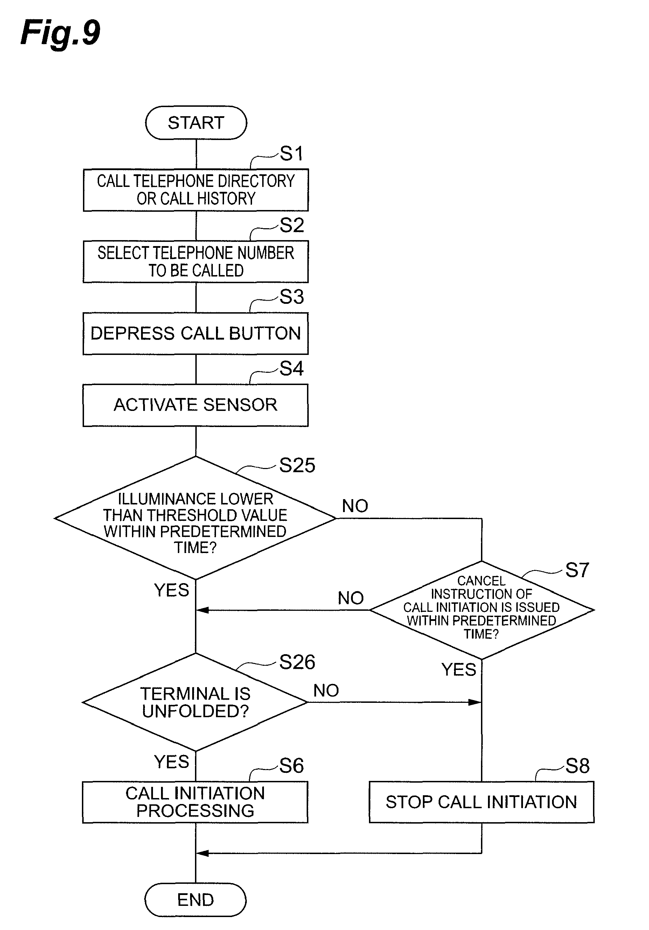

Subsequently, a call initiation control method in the mobile phone 40 configured as above will be described in detail with reference to Fig. 9.

First, as in the first embodiment, a directory or a telephone history is called (Step S1), and a telephone number to be called is selected (Step S2). Subsequently, the input button 18d serving as a call button is depressed so as to initiate a call on the basis of the selected telephone number (Step S3). Thereafter, the illuminance sensor 20c is activated by the control section 26 (Step S4), such that illuminance around the speaker 14 of the mobile phone 40 is continuously measured. In Step S4, the folding/unfolding sensor 20d is also activated.

Subsequently, the determination section 22 determines whether or not the measured illuminance is lower than a predetermined threshold illuminance stored in the storage section 24 (Step S25). If it is determined that the measured illuminance is lower than the threshold illuminance, the process progresses to Step S26, and it is confirmed whether or not the mobile phone 40 is unfolded. If the mobile phone 40 is unfolded, it is determined that the call start motion has been made by the user U. The process progresses to Step S6 and the call initiation processing is performed. If it is determined in Step S25 that the measured illuminance is not lower than the predetermined threshold illuminance, it is determined that the call start motion has not been made by the user U. Process progresses to Steps S7 and S8 and the same processing as in the first embodiment is performed. When it is determined in Step S26 that the mobile phone 40 is folded, the process progresses to Step S8, and the call initiation processing ends.

As described above, according to this embodiment, as in the first embodiment, it is determined whether or not the call start motion is made by the user U after the call initiation instruction has been received, and when it is determined that the call start motion has been made, the call initiation processing based on the received call initiation instruction is performed. For this reason, in the mobile phone 40 of this embodiment, a time lag for cancel processing can be secured, and erroneous call initiation can be effectively prevented. In this embodiment, the determination on the call start motion is made by using the illuminance sensor 20c, such as a simple sensor or a sensor which is embedded in the telephone, such that it is possible to realize the prevention of erroneous call initiation with a simple means and to easily incorporate a function of preventing erroneous call initiation in the mobile phone 40.

As described above, although the invention has been specifically described on the basis of the foregoing embodiments, the invention is not limited to the foregoing embodiments. For example, although in the foregoing embodiments, the mobile phone 10 has been described as an example, the invention may be applied to a general telephone. Although in the foregoing embodiments, various sensors are used to determine whether or not the call start motion is made by the user U, the determination may be made by using other sensors. In the foregoing embodiments, when the cancel instruction of call initiation is not issued within a predetermined time after the call initiation instruction has been received, the call initiation processing is performed. To the contrary, when the determination on the call start motion is not made by the determination section 22 within a predetermined time, the control section 26 may discard the call initiation instruction received by the input section 18 and stop the call initiation processing.

## Claims

1. A telephone comprising:
an input unit 18 that receives a call initiation instruction for a call with another telephone;
a determination unit 22 that determines whether or not a user makes an motion to start the call after the call initiation instruction is received by the input unit; and
a control unit 26 that performs call initiation processing with respect to another telephone on the basis of the call initiation instruction received by the input unit 18 when the determination unit 22 determines that the motion to start the call has been made.

2. The telephone according to claim 1, further comprising:
a sound output unit 14 that outputs sound from another telephone at the time of the call; and
a distance detection unit 20 that is arranged in the vicinity of the sound output unit and detects the distance to a measurement target,
wherein the determination unit 22 determines that the motion to start the call has been made when the distance detected by the distance detection unit 20 becomes shorter than a predetermined distance.

3. The telephone according to claim 1 or 2, further comprising:
an acceleration detection unit 20b that detects acceleration applied to the telephone 10; and
a storage section 24 that stores standard data representing a variation in the acceleration when the motion to start the call is made,
wherein the determination unit 22 determines that the motion to start the call is made when the variation in the acceleration detected by the acceleration detection unit 20b is substantially the same as the variation in the acceleration represented by the standard data stored in the storage section 24.

4. The telephone according to any one of claims 1 to 3, further comprising:
a sound output unit 14 that outputs sound from another telephone at the time of the call; and
an illuminance detection unit 20c that is arranged in the vicinity of the sound output unit 14 and detects illuminance,
wherein the determination unit 22 determines that the motion to start the call has been made when the illuminance detected by the illuminance detection unit 20c is lower than a predetermined illuminance,.

5. The telephone according to any one of claims 1 to 4, wherein the input unit 18 receives a cancel instruction with respect to the call initiation instruction, and
when the determination unit 22 determines that the motion to start the call is not made within a predetermined time and when the cancel instruction is not received by the input unit 18 within the time, the control unit 26 performs the call initiation processing on the basis of the call initiation instruction received by the input unit 18.

6. The telephone according to any one of claims 1 to 5,
wherein the control unit 26 discards the call initiation instruction received by the input unit 18 and stops the call initiation processing when the determination unit 22 determines that the motion to start the call is not made within a predetermined time.

7. A method of controlling call initiation in a telephone, the method comprising the steps of:
receiving a call initiation instruction for a call with another telephone with an input unit 18;
determining whether or not a user makes a motion to start the call after the call initiation instruction is received in the receiving with a determination unit 22; and
performing call initiation processing with respect to another telephone on the basis of the call initiation instruction received in the receiving with a control unit when it is determined in the determining that the motion to start the call has been made.
